# EUROPÄISCHE PATENTSCHRIFT

(11) **EP 3 177 678 B1**
(45) Veröffentlichungstag und Bekanntmachung des Hinweises auf die Patenterteilung: **07.11.2018**
(21) Anmeldenummer: 14748193.1
(22) Anmeldetag: 04.08.2014
(51) Int. Cl.: C08J 9/00, C08G 18/48, C08L 75/04

(54) **VERFAHREN ZUM HERSTELLEN EINES WEICHEN POLYURETHANSCHAUMSTOFFS**
METHOD FOR PRODUCING A SOFT POLYURETHANE FOAM
PROCÉDÉ DE PRODUCTION D'UNE MOUSSE DE POLYURÉTHANE SOUPLE

(43) Veröffentlichungstag der Anmeldung: 14.06.2017
(73) Patentinhaber: Breckle Chemicals & Technics GmbH, 07570 Hohenölsen (DE)
(72) Erfinder: BRECKLE, Gerd, 07570 Hohenölsen (DE)
(74) Vertreter: Patentanwaltskanzlei Hübscher
(86) Internationale Anmeldenummer: PCT/EP2014/066709
(87) Internationale Veröffentlichungsnummer: WO 2016/019971

(56) Entgegenhaltungen:
- EP-A1- 0 511 570
- EP-A1- 2 336 223
- WO-A1-2007/144272
- DE-A1- 19 958 699
- DE-A1-102004 031 529

## Beschreibung

### Technisches Gebiet

Die Erfindung bezieht sich auf ein Verfahren zum Herstellen eines weichen Polyurethanschaumstoffs mit einem in den Zellwänden bzw. Zellstegen eingelagerten Polyurethangel, wobei die Reaktionskomponenten des Polyurethanschaumstoffs, nämlich eine Polyolkomponente und eine Polyisocyanatkomponente, gegebenenfalls mit Zusatzstoffen unter Einsatz eines Treibmittels verschäumt werden.

### Stand der Technik

Um bei weichen Polyurethanschäumen, wie sie vorzugsweise bei Matratzen, Pölstern, Sitzauflagen u. dgl., zum Einsatz kommen, eine gute Druckverteilung zu erreichen, ohne die Luftdurchlässigkeit zu gefährden, wurde bereits vorgeschlagen (WO 2011/069928 A2), beispielsweise ein Polyurethangel in die Zellwände bzw. Zellstege des weichen Polyurethanschaums einzulagern. Zu diesem Zweck wird ein aus entsprechenden Reaktionspartnern unter Einsatz eines Katalysators gewonnenes Polyurethangel in einer feinen Verteilung entweder den eine Polyolkomponente und eine Isocyanatkomponente umfassenden Reaktionskomponenten oder einer dieser Reaktionskomponenten vor dem Schäumungsvorgang zugemischt, sodass nach dem Schäumungsvorgang die Gelpartikel einen Teil der Zellwände bzw. Zellstege bilden, wodurch die physikalischen Eigenschaften des Polyurethanschaums im Sinn eines verbesserten viskoelastischen Verhaltens verändert werden, ohne die für die Luftdurchlässigkeit maßgebliche Offenporigkeit zu stören.

Polyurethangele auf der Basis von Reaktionspartnern aus Polyolen und Polyisocyanaten sind bekannt (EP 0 511 570 A1) und enthalten üblicherweise mehrere Polyole in einem bestimmten Verhältnis der Molekulargewichte als kohärentes Dispersionsmittel, in dem ein durch Urethanbindungen kovalent vernetztes polymeres Netzwerk dispergiert ist. Solche Polyurethangele haben den Vorteil, dass ihre viskoelastischen Eigenschaften zwischen einem gelatinartigen Zustand und einem festen Gel durch Variieren des Isocyanatindex und der Funktionalität der Ausgangsmaterialien geändert und folglich an unterschiedliche Anforderungen angepasst werden können. Außerdem weisen sie eine hohe Stabilität auch bei höheren Temperaturen auf, weil das Polyol als Dispersionsmittel fest im Gel gebunden ist. Nachteilig ist allerdings, dass das gesondert herzustellende Polyurethangel feinteilig den Reaktionskomponenten des Polyurethanschaumstoffs homogen zugemischt werden muss, was aufgrund der viskoelastischen Eigenschaften aufwendig und schwierig ist.

### Darstellung der Erfindung

Der Erfindung liegt somit die Aufgabe zugrunde, ein einfaches Verfahren zum Herstellen eines weichen Polyurethanschaums mit Einlagerungen eines Polyurethangels zur Verbesserung der viskoelastischen Eigenschaften anzugeben, ohne die gute Luftdurchlässigkeit auch bei einer Druckbelastung des Polyurethanschaumstoffs zu gefährden.

Ausgehend von einem Verfahren der eingangs geschilderten Art löst die Erfindung die gestellte Aufgabe dadurch, dass die Polyolkomponente aus 10 bis 30 Gew.% eines trifunktionellen Polyetherpolyols mit sekundären Hydroxyl-Endgruppen und einer Hydroxylzahl von 40 bis 50, aus 30 bis 50 Gew.% eines tri- oder quattrofunktionellen Polyetherpolyols mit primären und sekundären Hydroxyl-Endgruppen im Verhältnis von 0,2 : 2,0 bis 2,0 : 0,2 und mit einer Hydroxylzahl von 150 bis 200 sowie aus 15 bis 40 Gew.% eines trifunktionellen statistischen Block-Copolymers von Ethylen- und Propylenoxid im EO/PO-Verhältnis von 0,5 : 1 bis 1 : 0,5 mit einer Hydroxylzahl von 28 bis 38 gemischt wird, dass die in einer einem NCO/OH-Verhältnis zwischen 0,9 und 1,05 entsprechenden Menge eingesetzte Polyisocyanatkomponente aus wenigstens einem Isocyanat aus einer Toluoldiisocyanat, Prepolymerisocyanate auf der Basis von Toluoldiisocyanaten mit einem NCO-Gehalt von 10 bis 30 Gew.% und Diphenylmethan-4,4'-diisocyanat umfassenden Isocyanatgruppe gebildet wird und dass diesen Reaktionskomponenten 1,4-Diazabicyclo[2.2.2]octan als Katalysator für eine Gelbildung in einer Menge von 0,05 bis 0,5 Gew.% zugemischt wird.

Es hat sich in überraschender Weise gezeigt, dass bei der getroffenen Auswahl an Reaktionskomponenten für die Herstellung des Polyurethanschaumstoffs die Beigabe eines entsprechenden Katalysators genügt, um einen Teil der Reaktionskomponenten für das Polyurethan gelieren zu lassen. Da die Gelierung innerhalb der Schäumzeit erfolgt, werden die gelierten Anteile des Polyurethans unmittelbar in die Zellwände und Zellstege des entstehenden Polyurethanschaumstoffs mit der Wirkung eingelagert, dass die viskoelastischen Eigenschaften des auf diese Art hergestellten Polyurethanschaumstoffs im Sinne einer für eine Körperabstützung vorteilhaften Verteilung einer Druckbelastung verbessert werden, wie dies für eine durchgehend viskoelastische Schicht erwartet werden kann, jedoch ohne den Nachteil einer durch diese Schichten bedingten Luft- und Dampfsperre. Die Offenporigkeit des weichen Polyurethanschaumstoffs bleibt ja wegen des Einbaus des polyurethanen Gelanteils in die Zellwände und Zellstege erhalten. Durch eine Variation der Mischungsverhältnisse der gewählten Reaktionskomponenten, insbesondere der Polyole, können die Eigenschaften der erfindungsgemäß hergestellten Polyurethanschaumstoffe in einem weiten Bereich an unterschiedliche Anforderungen eingestellt werden. Außerdem hat sich in überraschender Weise herausgestellt, dass die viskoelastischen Eigenschaften des Polyurethanschaumstoffs in Verbindung mit seinem Gelanteil in einem vergleichsweise weiten Bereich kaum eine Temperaturabhängigkeit zeigt, was im Hinblick auf den Einsatz solcher Polyurethanschaumstoffe vorzugsweise als Matratzen in einem physiologisch interessanten Bereich zwischen einer Raumtemperatur von 12 °C und einer Körpertemperatur von 40 °C von besonderer Bedeutung ist.

Obwohl grundsätzlich alle Isocyanate aus der angegebenen Isocyanatgruppe geeignet sind, werden besonders vorteilhafte Herstellungsbedingungen für erfindungsgemäße Polyurethanschaumstoffe mit einem Anteil an einem Polyurethangel geschaffen, wenn ein Toluoldiisocyanat aus 80 Gew.% Toluol-2,4-diisocyanat und 20 Gew.% Toluol-2,6-diisocyanat zum Einsatz kommt. Außerdem kann die Menge der eingesetzten Polyisocyanatkomponente so gewählt werden, dass das NCO/OH-Verhältnis in vorteilhafter Weise kleiner 1 ist.

Zum Herstellen weicher Polyurethanschaumstoffe nach dem erfindungsgemäßen Verfahren werden neben den eigentlichen Reaktionskomponenten in herkömmlicher Weise Amin- und Hydroxylvernetzer, Schaumstabilisatoren und Zellregulatoren, Treibkatalysatoren sowie wässrige Treibmittel eingesetzt. Als Aminvernetzer kommen insbesondere Diethanolamin, Triethanolamin, Harnstoff (gegebenenfalls in Wasser gelöst) und Melamin in einer auf das Polyolgemisch bezogenen Menge von 0,1 bis 2,0 Gew.% in Frage. Als Hydroxylvernetzer bieten sich Sorbitol, Glucose, Fructose und Xylit gegebenenfalls in einer wässrigen Lösung an, und zwar in einer auf das Polyolgemisch bezogenen Menge von 0,1 bis 2,0 Gew.% an. Die Schaumstabilisatoren und Zellregulatoren können auf der Basis von Siloxan- oder Polyolefinoxidcopolymeren in einer auf das Polyolgemisch bezogenen Menge von 0,1 bis 3,0 Gew.% ausgewählt werden. Neben dem gegebenenfalls in Dipropylenglykol gelösten 1,4-Diazabicyclo[2.2.2]octan (DABCO) als Katalysator für die Gelbildung kann außerdem ein Zinnoktoat mit einem Zinngehalt von mindestens 25 Gew.% in einer Menge von 0,05 bis 0,5 Gew.% zum Einsatz kommen, um die Gelierzeit zu verkürzen. Für den Schäumungsvorgang empfiehlt sich ein tertiäres Amin als Treibkatalysator (0,05 bis 0,5 Gew.% bezogen auf das Polyolgemisch). Als Treibmittel dient schließlich Waser in einer Menge von 0,8 bis 4,0 Gew.% einschließlich des Wassers aus den wässrigen Lösungen.

Die Isocyanatkomponente, die vorzugsweise einen NCO-Index kleiner 100 aufweist, wird mit der Polyolkomponente in einer von der OH-Zahl der Polyole und der Vernetzungsmittel, von den primären und sekundären Aminen der Vernetzungsmittel und von der Gesamtmenge des Wassers als Treibmittel abhängigen, stöchiometrischen Menge unter Beigabe der jeweiligen Zusatzstoffe, Katalysatoren und des wässrigen Treibmittels gemischt, um nach dem Schäumvorgang einen weichen viskoelastischen Polyurethanschaumstoff mit Geleinlagerungen in den Zellwänden und Zellstegen zu erhalten.

Es braucht wohl nicht besonders hervorgehoben zu werden, dass erfindungsgemäße Polyurethanschaumstoffe bei Bedarf selbstverständlich in an sich bekannter Weise mit Farbstoffen, Biociden, Additiven, UV-Stabilisatoren, Flammschutzmitteln u. dgl. ausgerüstet werden können.

### Beispiel 1

20 Gewichtsteile eines trifunktionellen Polyetherpolyols mit sekundären Hydroxyl-Endgruppen und einer Hydroxylzahl von 48 mg KOH/g werden mit 45 Gewichtsteilen eines trifunktionellen Polyetherpolyols mit primären und sekundären Hydroxyl-Endgruppen und mit einer Hydroxylzahl von 184 mg KOH/g sowie mit 35 Gewichtsteilen eines trifunktionellen statistischen Block-Copolymers von Ethylen- und Propylenoxid mit einer Hydroxylzahl von 33 mg KOH/g gemischt. Diesem Polyolgemisch werden 31,5 Gewichtsteile eines Toluoldiisocyanatisomergemischs aus 80 Gew.% Toluol-2,4-diisocyanat und 20 Gew.% Toluol-2,6-diisocyanat (TDI 80/20) zusammen mit 2,2 Gewichtsteilen eines Silkonstabilisators, 0,4 Gewichtsteile einer 30 %igen wässrigen Sorbitollösung, 0,7 Gewichtsteile einer 45 %igen wässrigen Harnstofflösung, 0,08 Gewichtsteilen von CABCO (33 %ige Lösung in Dipropylenglykol), 0,15 Gewichtsteile eines tertiären Amins, 0,1 Gewichtsteile Zinnoktoat und mit 1,1 Gewichtsteilen Wasser vermengt.

Der hergestellte Polyurethanschaumstoff mit Anteilen an einem Polyurethangel in den Zellwänden und Zellstegen zeigte viskoelastische Eigenschaften, die in einem Temperaturbereich zwischen 18 °C und 37 °C als konstant angesehen werden können.

### Beispiel 2

Das Polyolgemisch entsprach der Mischung aus dem Beispiel 1, jedoch wurde an Stelle des Toluoldiisocyanats ein Diphenylmethan-4,4'-diisocyanat mit einem Anteil von 29,5 Gew.% NCO in einer Menge von 52 Gewichtsteilen (NCO-Index 97) verwendet. Die übrigen Mischungsbestandteile entsprachen wiederum denen des Beispiels 1.

Der hergestellte Polyurethanschaumstoff mit Anteilen an einem Polyurethangel in den Zellwänden und Zellstegen zeigte viskoelastische Eigenschaften, die jedoch nur in einem Temperaturbereich zwischen 30 °C und 35 °C als konstant angesehen werden können.

### Beispiel 3

Als Polyolgemisch wurden 25 Gewichtsteile eines trifunktionellen Polyetherpolyols mit sekundären Hydroxyl-Endgruppen und einer Hydroxylzahl von 48 mg KOH/g, 40 Gewichtsteile eines trifunktionellen Polyetherpolyols mit primären und sekundären Hydroxyl-Endgruppen und mit einer Hydroxylzahl von 184 mg KOH/g und 35 Gewichtsteile eines trifunktionellen statistischen Block-Copolymers von Ethylen- und Propylenoxid mit einer Hydroxylzahl von 33 mg KOH/g eingesetzt. Im Übrigen wurden die Bestandteile gemäß Beispiel 1 verwendet, jedoch mit der Ausnahme, dass unterschiedliche Mengen an Sorbitol, Harnstoff, Wasser und Toluoldiisocyanat, nämlich 0,5 Gewichtsteile Sorbitol, 0,5 Gewichtsteile Harnstoff (in 45 %iger Lösung), 1,2 Gewichtsteile Wasser und 36 Gewichtsteile Toluoldiisocyanat mit einem NCO-Index von 105, eingesetzt wurden.

Der hergestellte Polyurethanschaumstoff mit Anteilen an einem Polyurethangel in den Zellwänden und Zellstegen zeigte viskoelastische Eigenschaften, die in einem Temperaturbereich zwischen 16 °C und 38 °C als konstant angesehen werden können.

### Beispiel 4

Das Polyolgemisch entsprach der Mischung aus Beispiel 1, jedoch wurde an Stelle des Toluoldiisocyanatisomergemischs ein Prepolymerisocyanat aus TDI 80/20 und einem Triol basierend auf Glycerin und Propylenoxid mit einem Molgewicht von 260 bis 280 und einem Isocyanatgehalt von 30,2 Gew.% verwendet. Von diesem Prepolymerisocyanat wurden 50 g (entsprechend einem NCO-Index von 96) mit dem Polyolgemisch verschäumt.

Der hergestellte Polyurethanschaumstoff mit Anteilen an einem Polyurethangel in den Zellwänden und Zellstegen zeigte viskoelastische Eigenschaften, die in einem Temperaturbereich zwischen 20 °C und 40 °C als konstant angesehen werden können.

In der nachstehenden Tabelle sind die Eigenschaften der erfindungsgemäßen Polyurethanschaumstoffe gemäß den Beispielen 1 bis 4 zusammengefasst.

| | Beispiel 1 | Beispiel 2 | Beispiel 3 | Beispiel 4 |
|---|---|---|---|---|
| Rohdichte [kg/m³] | 60 | 64 | 58 | 60 |
| Stauchhärte [kPa] | 2 | 2,8 | 2,1 | 2.3 |
| Bruchdehnung | 85 % | 89 % | 72 % | 82 % |
| Zugfestigkeit [kPa] | 38 | 36 | 36 | 40 |
| Rückprallelastizität | 22 % | 16 % | 21 % | 23 % |
| Druckverformungstest | 3 % | 3,8 % | 2,8 % | 2,9 % |

Matratzen können zur Gänze aus einem erfindungsgemäßen Schaumstoff gefertigt werden, eine bessere Anpassung an die jeweils gestellten Anforderungen kann im Allgemeinen aber durch einen Schichtaufbau erreicht werden. So kann beispielsweise für die herzustellende Matratze ein Kern aus einem HR-Polyurethanschaumstoff mit einer offenporigen Zellstruktur (Rohdichte 42 kg/m³, Stauchhärte 3,8 kPa, Bruchdehnung 80 %, Zugfestigkeit 95 kPa, Rückprallelastizität 58 %, Druckverformungsrest 5,8 %) beidseitig mit einer Deckschicht aus einem erfindungsgemäßen Polyurethanschaumstoff kaschiert werden, sodass sich eine vorteilhafte Kombination der Stützwirkung des Matratzenkerns mit den viskoelastischen Eigenschaften der Deckschichten ergibt, und zwar bei einer ausgezeichneten Durchlüftung, weil die Deckschichten eine vergleichbare offenporige Struktur aufweisen.

## Patentansprüche

1. Verfahren zum Herstellen eines weichen Polyurethanschaumstoffs mit einem in den Zellwänden bzw. Zellstegen eingelagerten Polyurethangel, wobei die Reaktionskomponenten des Polyurethanschaumstoffs, nämlich eine Polyolkomponente und eine Polyisocyanatkomponente, gegebenenfalls mit Zusatzstoffen unter Einsatz eines Treibmittels verschäumt werden, **dadurch gekennzeichnet, dass** die Polyolkomponente aus 10 bis 30 Gew.% eines trifunktionellen Polyetherpolyols mit sekundären Hydroxyl-Endgruppen und einer Hydroxylzahl von 40 bis 50 mg KOH/g, aus 30 bis 50 Gew.% eines tri- oder quattrofunktionellen Polyetherpolyols mit primären und sekundären Hydroxyl-Endgruppen im Verhältnis von 0,2 : 2,0 bis 2,0 : 0,2 und mit einer Hydroxylzahl von 150 bis 200 mg KOH/g sowie aus 15 bis 40 Gew.% eines trifunktionellen statistischen Block-Copolymers von Ethylen- und Propylenoxid im EO/PO-Verhältnis von 0,5 : 1 bis 1 : 0,5 mit einer Hydroxylzahl von 28 bis 38 mg KOH/g gemischt wird, dass die in einer einem NCO/OH-Verhältnis zwischen 0,9 und 1,05 entsprechenden Menge eingesetzte Polyisocyanatkomponente aus wenigstens einem Isocyanat aus einer Toluoldiisocyanat, Prepolymerisocyanate auf Basis von Toluoldiisocyanaten mit einem NCO-Gehalt von 10 bis 30 Gew.% und Diphenylmethan-4,4'-diisocyanat umfassenden Isocyanatgruppe gebildet wird und dass diesen Reaktionskomponenten 1,4-Diazabicyclo[2.2.2]octan als Katalysator für eine Gelbildung in einer Menge von 0,05 bis 0,5 Gew.% zugemischt wird.

2. Verfahren nach Anspruch 1, **dadurch gekennzeichnet, dass** als Toluoldiisocyanat der Polyisocyanatkomponente ein Isomerengemisch aus 80 Gew.% Toluol-2,4-diisocyanat und 20 Gew.% Toluol-2,6-diisocyanat eingesetzt wird.

3. Verfahren nach einem der Ansprüche 1 oder 2, **dadurch gekennzeichnet, dass** das NCO/OH-Verhältnis der Polyisocyanatkomponente kleiner 1 gewählt wird.

## Claims

1. A method for producing a flexible polyurethane foam having a polyurethane gel embedded in the cell walls or cell struts, the reaction components of the polyurethane foam, namely a polyol component and a polyisocyanate component, optionally with additives, being foamed using a blowing agent, **characterised in that** the polyol component is mixed from 10 to 30 wt.% of a trifunctional polyether polyol having secondary hydroxyl end groups and a hydroxyl value from 40 to 50 mg KOH/g, from 30 to 50 wt.% of a tri- or tetrafunctional polyether polyol having primary and secondary hydroxyl end groups in a ratio of 0.2:2.0 to 2.0:0.2 and having a hydroxyl value of 150 to 200 mg KOH/g and from 15 to 40 wt.% of a trifunctional random block copolymer of ethylene oxide and propylene oxide in an EO/PO ratio of 0.5:1 to 1:0.5 having a hydroxyl value of 28 to 38 mg KOH/g, **in that** the polyisocyanate component used in a quantity corresponding to an NCO/OH ratio between 0.9 and 1.05 is formed from at least one isocyanate from a group of isocyanates comprising toluene diisocyanate, prepolymer isocyanates based on toluene diisocyanate having an NCO content of 10 to 30 wt.% and diphenylmethane 4,4'-diisocyanate and **in that** 1,4-diazabicyclo[2.2.2]octane in a quantity of 0.05 to 0.5 wt.% is mixed into these reaction components as gelation catalyst.

2. A method according to claim 1, **characterised in that** an isomer mixture of 80 wt.% toluene 2,4-diisocyanate and 20 wt.% toluene 2,6-diisocyanate is used as the toluene diisocyanate of the polyisocyanate component.

3. A method according to one of claims 1 or 2, **characterised in that** the NCO/OH ratio of the polyisocyanate component is selected to be less than 1.

## Revendications

1. Procédé de production d'une mousse de polyuréthane souple avec un gel de polyuréthane incorporé dans les parois cellulaires ou traverses cellulaires, les composants de réaction de la mousse de polyuréthane, à savoir un composant polyol et un composant polyisocyanate, étant transformés en mousse, le cas échéant, avec des additifs en utilisant un agent gonflant, **caractérisé en ce que** le composant polyalcool constitué de 10 à 30 % en poids d'un polyéther-polyalcool trifonctionnel ayant des groupes terminaux hydroxyle secondaires et un indice d'hydroxyle de 40 à 50 mg KOH/g, de 30 à 50 % en poids d'un polyéther-polyalcool tri- ou quadrifonctionnel ayant des groupes terminaux hydroxyle primaires et secondaires dans un rapport allant de 0,2:2,0 à 2,0:0,2 et un indice d'hydroxyle de 150 à 200 mg KOH/g et de 15 à 40 % en poids d'un copolymère séquencé statistique trifonctionnel d'oxyde d'éthylène et d'oxyde de propylène dans un rapport OE/OP allant de 0,5:1 à 1:0,5, présentant un indice d'hydroxyle de 28 à 38 mg KOH/g, **en ce que** l'on forme le composant polyisocyanate, utilisé dans une quantité correspondant à un rapport NCO/OH, entre 0,9 et 1,05, à partir d'au moins un isocyanate constitué d'un groupe isocyanate comprenant du diisocyanate de toluène, des isocyanates prépolymères sur la base de diisocyanates de toluène ayant une teneur en NCO de 10 à 30 % en poids, et du diphénylméthane-4,4'-diisocyanate et **en ce que** du 1,4-diazabicyclo[2.2.2]octane est mélangé à ces composants de réaction en tant que catalyseur pour une formation de gel dans une quantité de 0,05 à 0,5 % en poids.

2. Procédé selon la revendication 1, **caractérisé en ce qu'**un mélange d'isomères constitué à 80 % en poids de toluène-2,4-diisocyanate et 20 % en poids de toluène-2,6-diisocyanate est utilisé en tant que toluène-diisocyanate du composant polyisocyanate.

3. Procédé selon l'une des revendications 1 ou 2, **caractérisé en ce que** le rapport NCO/OH du composant polyisocyanate est choisi inférieur à 1.
